# EUROPÄISCHE PATENTSCHRIFT

(11) **EP 3 434 543 B1**
(45) Veröffentlichungstag und Bekanntmachung des Hinweises auf die Patenterteilung: **11.11.2020**
(21) Anmeldenummer: 18181182.9
(22) Anmeldetag: 02.07.2018
(51) Int. Cl.: B60T 17/04, B62L 3/02, B62K 21/12

(54) **HYDRAULIKLEITUNGSANSCHLUSS FÜR EINE HYDRAULISCHE BREMSE LENKERGEFÜHRTER FAHRZEUGE UND HYDRAULISCHE BREMSE FÜR EIN LENKERGEFÜHRTES FAHRZEUG**
HYDRAULIC LINE CONNECTION FOR A HYDRAULIC BRAKE OF HANDLEBAR GUIDED VEHICLES AND HYDRAULIC BRAKE FOR A HANDLEBAR GUIDED VEHICLE
RACCORDEMENT DE CONDUITE HYDRAULIQUE POUR UN FREIN HYDRAULIQUE DE VÉHICULES GUIDÉS AU MOYEN D'UN GUIDON ET FREIN HYDRAULIQUE POUR UN VÉHICULE GUIDÉ AU MOYEN D'UN GUIDON

(30) Priorität: 10.07.2017 DE 102017211793
(43) Veröffentlichungstag der Anmeldung: 30.01.2019
(73) Patentinhaber: Gustav Magenwirth GmbH & Co. KG, 72574 Bad Urach (DE)
(72) Erfinder: Hujer, Joachim, 72582 Grabenstetten (DE); Coconcelli, Jochen, 72555 Metzingen (DE); Neutsch, Christian, 72764 Reutlingen (DE)
(74) Vertreter: Friese Goeden Patentanwälte PartGmbB

(56) Entgegenhaltungen:
- EP-A1- 2 955 072
- EP-A2- 2 431 647
- DE-A1-102012 112 226
- DE-A1-102013 009 904
- US-A1- 2014 230 934
- US-A1- 2016 251 056
- US-B1- 9 120 522

## Beschreibung

Die Erfindung betrifft einen Hydraulikleitungsanschluss für eine hydraulische Bremse lenkergeführter Fahrzeuge, insbesondere für eine hydraulische Fahrradbremse, gemäß Anspruch 1, und hydraulische Bremse für ein lenkergeführtes Fahrzeug, insbesondere für ein Fahrrad.

Hydraulische Bremsen lenkergeführter Fahrzeuge weisen üblicherweise eine an einem Lenker montierte Geberarmatur auf, an der eine Hydraulikleitung angeschlossen ist, die zu einer Nehmerarmatur führt, die beispielsweise ein Bremszylinder(paar) einer hydraulischen (Fahrrad-) Felgenbremse bzw. einen Bremssattel einer hydraulischen (Fahrrad- oder Motorrad-)Scheibenbremse ist.

Es ist üblich, derartige hydraulische Bremsen vorbefüllt an den Erstausrüster bzw. Endkunden auszuliefern, damit der Hersteller das aufwendige Befüllen und Entlüften der hydraulischen Bremse mit seiner Erfahrung sicher und zuverlässig ausführen kann. Zur Montage an dem lenkergeführten Fahrzeug wird die Hydraulikleitung außen oder innen verlegt.

Wenn die Hydraulikleitung nicht außen am Fahrzeug, sondern innen, d.h. zumindest teilweise in dem Rahmen und/oder Lenker, verlegt werden soll, ist es erforderlich, die Gebervorrichtung und /oder die Nehmervorrichtung der hydraulischen Bremse von der Hydraulikleitung zu trennen und/oder die Hydraulikleitung zu trennen. Somit kann die Hydraulikleitung an den gewünschten Stellen innen verlegt werden.

Damit die hydraulische Bremse trotzdem vorbefüllt an den Kunden (z.B. Erstausrüster bzw. Werkstatt oder Endkunde) ausgeliefert werden kann, ist es aus der DE 10 2011 085 000 A1 bekannt, die hydraulische Bremse in zwei Teilen auszuliefern und die Trennstellen abzudichten, d.h. den Hydraulikanschluss der Hydraulikkomponente, an der die Hydraulikleitung nach dem Befüllen der hydraulischen Bremse entfernt wurde, und die offene Seite der Hydraulikleitung abzudichten. Um die Dichtung zu entfernen, muss die montierte und verbundene Bremse betätigt werden, so dass das Dichtungselement reißt und in der Leitung verbleibt.

Die bekannten Hydraulikanschlussvorrichtungen stellen eine Möglichkeit bereit, vorbefüllte Hydraulikkomponente getrennt von der Hydraulikleitung auszuliefern, so dass die Leitung innen verlegt werden kann und das System wieder zusammengesetzt werden kann. Es besteht aber der Nachteil, dass die Dichtung nicht vollständig entfernt wird und es daher zu Fehlern im Betrieb kommen kann, beispielsweise wenn Reste der gelösten Dichtungseinrichtung abreißen und die Betätigung stören.

US 2014/230934 A1 offenbart einen Hydraulikleitungsanschluss für eine hydraulische Bremse lenkergeführter Fahrzeuge, wobei ein Fortsatz dazu benutzt wird die Hydraulikleitung samt Hydraulikleitungsanschluss zum Anschlussort durch den Rahmen des Fahrzeugs hindurchzuführen. Der Fortsatz wird dann vor der Endmontage der Hydraulikleitung an der Hydraulikkomponente entfernt.

Der Erfindung liegt daher die Aufgabe zugrunde, eine Hydraulikanschlussvorrichtung anzugeben, die eine getrennte Auslieferung vorbefüllter hydraulischer Systeme für lenkergeführte Fahrzeuge ermöglichen, und gleichzeitig eine einfache Montage und einen sicheren Betrieb gewährleisten.

Die Aufgabe wird erfindungsgemäß durch einen Hydraulikleitungsanschluss gemäß Anspruch 1 gelöst. Vorteilhafte Weiterbildungen der Erfindung finden sich in den Unteransprüchen.

Gemäß der Erfindung wird ein Hydraulikleitungsanschluss für eine hydraulische Bremse lenkergeführter Fahrzeuge mit einer Leitungsbefestigungsvorrichtung angegeben, die einen Befestigungsabschnitt zur Befestigung der Leitungsbefestigungsvorrichtung in einer Aufnahmeeinrichtung einer Hydraulikkomponente der hydraulischen Bremse und einen Verbindungsabschnitt zur Verbindung mit einer Hydraulikleitung aufweist, wobei die Leitungsbefestigungsvorrichtung einen Fortsatz aufweist, der an dem Befestigungsabschnitt auf der dem Verbindungsabschnitt gegenüberliegenden Seite angeordnet ist. Erfindungsgemäß weist der Fortsatz einen größeren Durchmesser als der Befestigungsabschnitt auf.

Die Ausführung der Erfindung hat den Vorteil, dass der Fortsatz nach der Befüllung als Dichtung dienen und zur Montage entfernt werden kann. Dadurch ist es möglich, die Hydraulikleitung zu befüllen und mit dem Fortsatz sicher zu verschließen. Zur Montage kann der Fortsatz einfach von dem Leitungsbefestigungsvorrichtung getrennt werden, so dass der Befestigungsabschnitt einfach und sicher in der Aufnahmeinrichtung der Hydraulikkomponente angeordnet und gesichert werden kann. Da der Fortsatz vor der Montage entfernt werden kann, besteht keine Gefahr, dass die Betätigung durch Reste einer Dichtungseinrichtung gestört werden kann. Des Weiteren kann der Fortsatz gar nicht in die Aufnahmeeinrichtung der Hydraulikkomponente eingeschoben werden, weil deren Innendurchmesser genau dem Aussendurchmesser des Befestigungsabschnitts entspricht.

Erfindungsgemäß kann die Leitungsbefestigungsvorrichtung eine Trenneinrichtung aufweisen, die zwischen dem Befestigungsabschnitt und dem Fortsatz angeordnet ist. Diese Ausführung hat den Vorteil, dass der Fortsatz leichter und einfacher von dem Befestigungsabschnitt entfernt werden kann.

Erfindungsgemäß kann die Trenneinrichtung als Sollbruchstelle ausgebildet sein. Beispielsweise kann die Trenneinrichtung als eine umlaufende Rille ausgebildet sein, an der der Fortsatz durch Einwirkung beispielsweise mittels eines Werkzeugs bzw. eines Spezialwerkzeugs abgetrennt werden kann.

Erfindungsgemäß kann in dem Fortsatz eine Dichtungseinrichtung angeordnet sein.

Das Vorsehen einer Dichtungseinrichtung in dem Fortsatz hat den Vorteil, dass die Leitungsbefestigungsvorrichtung an der Hydraulikleitung befestigt werden kann und anschließend die Hydraulikleitung durch den Fortsatz mit Hydraulikflüssigkeit befüllt werden kann. Anschließend kann der Fortsatz mit der Dichtungseinrichtung verschlossen werden. Die Dichtungseinrichtung kann beispielsweise eine Kugel sein, die in den Fortsatz mit einer Presspassung eingepresst wird. Andere dem Fachmann bekannte Dichtungseinrichtungen sind denkbar. Dabei ist zu beachten, dass die Dichtungeinrichtung nicht den vollen Druck aushalten können muss, der beim Bremsen in der Hydrauliklietung aufgebaut werden kann, weil die Dichtungseinrichtung nur die Funktion einer Transportsicherung erfüllen muss und bei der Befestigung der Leitungsbefestigungseinrichtung an der Aufnahmeeinrichtung der Hydraulikkomponente zusammen mit dem Fortsatz entfernt wird. Alternativ kann der Fortsatz auch geschlossen ausgebildet sein. Das hat gegenüber der bevorzugten Ausführung den Nachteil, dass die Hydraulikleitung vorbefüllt werden muss, bevor die Leitungsbefestigungsvorrichtung an der Hydraulikleitung befestigt wird.

Erfindungsgemäß kann der Fortsatz einen anderen Querschnitt als der Befestigungsabschnitt aufweisen.

Diese Ausführung hat den Vorteil, dass der Bediener daran gehindert wird, die Leitungsbefestigungsvorrichtung versehentlich vor dem Abtrennen des Fortsatzes mit dem Fortsatz in der Aufnahmeeinrichtung der Hydraulikomponente anzuordnen. Das ist deshalb der Fall, weil der Querschnitt des Befestigungsabschnitts genau an den freien Querschnitt der Aufnahmeinrichtung angepasst ist. Durch den anderen Querschnitt passt der Fortsatz nicht in die Aufnahmeeinrichtung.

Alternativ oder zusätzlich kann die Aussenkontur des Forsatzes auch eine andere Form als der Innendurchmesser der Aufnahmeeinrichtung der Hydraulikkompenente aufweisen. Beispielsweise kann die Aussenkontur des Fortsatzes vieleckig ausgebildet sein, während die Aufnahmeeinrichtung eine kreisförmige Innenkontur aufweist. Ebenso kann die Aussenkontur des Fortsatzes vieleckig ausgebildet sein, während die Innenkontur der Aufnahmeeinrichtung kreisförmig ausgebildet sein kann, wobei der Durchmesser der Kreiskontur beispielsweise kleiner als der Aussenkreis der Vieleckkontur ist.

Erfindungsgemäß kann der Fortsatz einen um mindestes 5%, vorzugsweise um mindestens 10%, weiter vorzugsweise um mindestens 15% und bevorzugt von ungefähr 20% größeren Durchmesser als der Befestigungsabschnitt aufweisen. Erfindungsgemäß kann der Fortsatz einen weniger als 50%, vorzugsweise weniger als 40%, weiter vorzugsweise weniger als 30% und bevorzugt von ungefähr 20% größeren Durchmesser als der Befestigungsabschnitt aufweisen.

Beispielsweise kann der Fortsatz einen Durchmesser von 6 mm aufweisen, während der Befestigungsabschnitt einen Durchmesser von 5 mm aufweist.

Erfindungsgemäß kann der Fortsatz einen größeren Querschnitt als der Befestigungsabschnitt aufweisen, wodurch sich die oben beschriebenen Vorteile ergeben, dass der Fortsatz nicht versehentlich in der Aufnahmeinrichtung der Hydraulickomponente angeordnet werden kann.

Erfindungsgemäß kann der Fortsatz einen um mindestes 10%, vorzugsweise um mindestens 20%, weiter vorzugsweise um mindestens 30%, noch weiter vorzugsweise um mindestens 40% und bevorzugt von ungefähr 50% größeren Querschnitt als der Befestigungsabschnitt aufweisen.

Erfindungsgemäß kann der Fortsatz einen weniger als 100%, vorzugsweise weniger als 80%, weiter vorzugsweise weniger als 70%, noch weiter vorzugsweise weniger als 60% und bevorzugt von ungefähr 50% größeren Querschnitt als der Befestigungsabschnitt aufweisen.

Ein Beispiel, das nicht durch die Erfindung im Sinne der Ansprüche abgedeckt ist, betrifft eine Hydraulikleitungsanschluss- und Hydraulikkomponentenbefestigungsvorrichtung für eine hydraulische Betätigungsvorrichtung lenkergeführter Fahrzeuge.

Bei lenkergeführten Fahrzeugen besteht der Wunsch, möglichst alle Leitungen in dem Lenker und dem Rahmen bzw. der Gabel zu verlegen, um Beschädigungen zu vermeiden. Das gilt insbesondere für die Hydraulikleitungen von Hydraulischen Betätigungssystemen, wie Bremsen, Kupplungen und anderen hydraulischen Betätigungssystemen, wie Schaltungen etc..

Es ist bekannt, dass bei den am Lenker angeordneten Gebervorrichtungen die Leitungen aus der Gebervorrichtung heraus und durch ein Loch in dem Lenkerrohr in das Lenkerrohr geführt werden, so dass die Hydraulikleitung innerhalb des Lenkers und gegebenenfalls auch weiter in dem Rahmen bzw. der Gabel verlegt werden kann.

Diese Ausführungen haben den Nachteil, dass das Loch in dem Lenkerrohr an die Position der Gebervorrichtung angepaßt werden muss und eine nachträgliche Verstellung der Position der Gebervorrichtung nicht mehr ohne weiteres möglich ist, ohne die Hydraulikleitung zu verbiegen.

Somit ist die zu lösende Aufgabe, Hydraulikleitungsanschluss- und Hydraulikkomponentenbefestigungsvorrichtung für eine hydraulische Betätigungsvorrichtung lenkergeführter Fahrzeuge anzugeben, bei der die Hydraulikleitung innenliegend verlegt werden kann und gleichzeitig, die Stellung der Hydraulikomponente optimal am die Bedürfnisse angepaßt werden kann.

Gemäß einem nicht erfindungsgemäßen Beispiel wird eine Hydraulikleitungsanschluss- und Hydraulikkomponentenbefestigungsvorrichtung für eine hydraulische Betätigungsvorrichtung lenkergeführter Fahrzeuge mit einer Hydraulikleitungsanschlusseinrichtung, die in einem Lenker, einem Gabelbein und/oder Rahmenteil des lenkergeführten Fahrzeugs anordbar ist, einer Hydraulikkomponentenbefestigungseinrichtung, die eine Aufnahmeeinrichtung zur Aufnahme der Hydraulikkomponente aufweist, und einer Hydraulikverbindungseinrichtung angegeben, die die Hydraulikleitungsanschlusseinrichtung mit der Hydraulikkomponentenbefestigungseinrichtung verbindet, wobei die Aufnahmeeinrichtung einen Verbindungskanal aufweist, der mit dem Druckraum der Hydraulikkomponente verbindbar ist.

Dieses nicht erfindungsgemäße Beispiel hat den Vorteil, dass die Hydraulikleitung vollständig innenliegend verlegt werden kann. Besonders vorteilhaft ist die Kombination mit dem Hydraulikleitungsanschluss gemäß der oben beschriebenen Ausführung, der beispielsweise an dem Ende der Hydraulikleitung vorgesehen werden kann, um an die entsprehende Hydraulikkomponente angeschlossen zu werden. In diesem Fall kann die Baugruppe vorzugsweise als komplette Lenkeranordnung als Erstausrüstung mit vorgefüllten Hydraulikkomponenten geliefert werden. Beispielhaft kann sich der Verbindungskanal in Umfangsrichtung bezogen auf das Lenkerrohr erstrecken. Alternativ oder zusätzlich kann der sich in Umfangsrichtung bezogen auf das Lenkerrohr erstreckende Verbindungskanal auch in der Hydraulikkomponente bzw. der Fläche der Hydraulikkomponente ausgebildet sein, die der Hydraulikkomponentenbefestigungsvorrichtung gegenüberliegt bzw. mit der die Hydraulikkomponente an der Hydraulikkomponentenbefestigungsvorrichtung befestigt wird.

Beispielhaft kann der Verbindungskanal in Umfangsrichtung bezogen auf das Lenkerrohr über einen Winkelbereich von mehr als 20 Grad erstrecken.

Beispielhaft kann der Verbindungskanal in Umfangsrichtung bezogen auf das Lenkerrohr über einen Winkelbereich von mehr als 30 Grad erstrecken.

Beispielhaft kann der Verbindungskanal in Umfangsrichtung bezogen auf das Lenkerrohr über einen Winkelbereich von mehr als 40 Grad erstrecken.

Beispielhaft kann der Verbindungskanal in Umfangsrichtung bezogen auf das Lenkerrohr über einen Winkelbereich von weniger als 180 Grad erstrecken.

Beispielhaft kann der Verbindungskanal in Umfangsrichtung bezogen auf das Lenkerrohr über einen Winkelbereich von weniger als 150 Grad erstrecken.

Beispielhaft kann der Verbindungskanal in Umfangsrichtung bezogen auf das Lenkerrohr über einen Winkelbereich von weniger als 120 Grad erstrecken.

Beispielhaft kann der Verbindungskanal in Umfangsrichtung bezogen auf das Lenkerrohr über einen Winkelbereich von weniger als 90 Grad erstrecken.

Beispielhaft kann der Verbindungskanal in Umfangsrichtung bezogen auf das Lenkerrohr über einen Winkelbereich von weniger als 70 Grad erstrecken.

Beispielhaft kann der Verbindungskanal in Umfangsrichtung bezogen auf das Lenkerrohr über einen Winkelbereich von ungefähr 50 Grad erstrecken.

Beispielhaft kann der Verbindungskanal über radial wirkende Dichtungen abgedichtet sein. Die radial wirkenden Dichtungen können dabei in Nuten angeordent sein, die auf der Aufnahmeinrichtung ausgebildet sind. Die radial wirkenden Dichtungen können dabei über eine Presspassung zwischen der Hydraulikkomponente und der Aufnahmeinrichtung beaufschlagt werden. Alternativ oder zusätzlich können die Nuten für die Aufnahme der Dichringe im Gehäuse der Hydraulikkomponente vorgesehen sein.

Beispielhaft kann der Verbindungskanal über axial wirkende Dichtungen abgedichtet sein. Die axial wirkenden Dichtungen können dabei als Quetschringe ausgebildet sein, die zwischen der Aufnahmeeinrichtung und der Hydraulikkomponente gequetscht werden. Der Quetschdruck kann dabei über einen Klemmring ausgeübt werden, der auf die Hydraulikkomponente geschraubt wird. Dabei kann die Hydraulikkomponente auf der dem Klemmring gegenüberliegenden Seite über einen Anschlag an dem anderen Quetschring anliegen, der sich an der Aufnahmeinrichtung abstützen kann.

Als weiteres nicht erfindungsgemäßes Beispiel wird eine Lenkeranordnung für lenkergeführte Fahrzeuge angegeben, die eine Hydraulikleitungsanschluss- und Hydraulikkomponentenbefestigungsvorrichtung für eine hydraulische Betätigungsvorrichtung lenkergeführter Fahrzeuge gemäß einem der oben beschriebenen nicht erfindungsgemäßen Beispiele aufweist. Die Erfindung betrifft auch eine hydraulische Bremse bzw. hydraulische Scheibenbremse bzw. hydraulische Felgenbremse mit einem Hydraulikleitungsanschluss für lenkergeführte Fahrzeuge gemäß einer der oben beschriebenen Ausführungen der Erfindung.

Ein weiteres Beispiel, das nicht durch die Erfindung im Sinne der Ansprüche abgedeckt ist, betrifft eine hydraulische Bremse bzw. hydraulische Scheibenbremse bzw. hydraulische Felgenbremse mit einer Hydraulikleitungsanschluss- und Hydraulikkomponentenbefestigungsvorrichtung gemäß einem der oben beschriebenen nicht erfindungsgemäßen Beispiele.

Ein weiteres Beispiel, das nicht durch die Erfindung im Sinne der Ansprüche abgedeckt ist, betrifft eine hydraulische Bremse bzw. hydraulische Scheibenbremse bzw. hydraulische Felgenbremse mit einer Lenkeranordnung gemäß einem der oben beschriebenen nicht erfindungsgemäßen Beispiele.

Die Erfindung wird im Folgenden anhand der in den Figuren gezeigten Ausführungsbeispiele beschrieben. Dabei werden folgende Bezugszeichen verwendet:
- 1: Hydraulikleitung
- 2: Hydraulikkomponente (Adapter, Gebervorrichtung, Nehmervorrichtung)
- 3: Lenkerrohr
- 4: Griffrohr
- 5: Gebergehäuse
- 6: Bremshebel
- 7: Lenkervorbau
- 8: Aussparung
- 10: Hydraulikleitungsanschlusseinrichtung
- 11: Hydraulikleitungsanschluss
- 12: Verbindungskanal
- 20: Hydraulikverbindungseinrichtung
- 21: Verbindungskanal
- 22: Bolzen
- 23: Dichtung
- 30: Hydraulikkomponentenbefestigungseinrichtung
- 31: Aussparung
- 32: Sicherungeinrichtung
- 33: Verbindungskanal
- 34: Ringaufnahme
- 35: Dichtung
- 36: Dichtung
- 37: Anschlag
- 38: Dichtung
- 39: Aussengewinde
- 40: Befestigungsanordnung
- 41: Bolzen
- 42: Konusring
- 43: Konusring
- 44: Konusfläche
- 51: Verbindungskanal
- 52: Druckraum
- 53: Ausgleichsbehälter
- 54: Befestigungsabschnitt
- 55: Anschlag
- 56: Aussengewinde
- 60: Klemmring
- 61: Innengewinde
- 100: Leitungsbefestigungsvorrichtung (Stützhülse)
- 110: Fortsatz (Dichtungskopf)
- 111: Innenwandung
- 112: Fase
- 113: Außenwandung
- 114: Dichtungseinrichtung
- 120: Trenneinrichtung (Sollbruchstelle, Einschnitt)
- 130: Befestigungsabschnitt
- 133: Außenwandung
- 140: Verbindungsabschnitt (Stutzen)
- 200: Aufnahmeeinrichtung (Überwurfschraube)
- 201: Innenwandung
- 210: Klemmeinrichtung (Klemmring)
- 300: Dichtungsvorrichtung (Stopfen)
- 301: Griffabschnitt
- 302: Schaftabschnitt
- 303: Übergangsabschnitt
- 304: Konusabschnitt
- D_{A}: Außendurchmesser des Fortsatzes der Leitungsbefestigungsvorrichtung
- D_{I}: Innendurchmesser der Aufnahmeeinrichtung

Kurzbeschreibung der Figuren:
- Fig. 1: zeigt eine Schnittansicht durch einen Hydraulikleitungsanschluss gemäß einer Ausführung der Erfindung.
- Fig. 2: zeigt eine Detailansicht des Hydraulikanschlusses von Fig. 1 im Bereich des in Fig. 1 mit II markierten Kreises.
- Fig. 3: zeigt eine Seitenansicht des Hydraulikleitungsanschlusses von Fig. 1 in einem ersten Schritt der Befestigung an einer Hydraulikkomponente.
- Fig. 4: zeigt eine Schnittansicht des Hydraulikleitungsanschlusses von Fig. 1 entlang der Linien IV-IV von Fig. 3.
- Fig. 5: zeigt eine Seitenansicht des Hydraulikleitungsanschlusses von Fig. 1 in einem weiteren Schritt der Befestigung an einer Hydraulikkomponente.
- Fig. 6: zeigt eine Schnittansicht des Hydraulikleitungsanschlusses von Fig. 1 entlang der Linien VI-VI von Fig. 5.
- Fig. 7: zeigt eine Seitenansicht des Hydraulikleitungsanschlusses von Fig. 1 in einem weiteren Schritt der Befestigung an einer Hydraulikkomponente.
- Fig. 8: zeigt eine Teilschnittansicht des Hydraulikleitungsanschlusses von Fig. 1 in dem der Fig. 7 entsprechenden Verfahrensschritt.
- Fig. 9: zeigt eine Teilschnittansicht einer Hydraulikkomponente einer hydraulischen Bremse mit einem Anschluss zum Anschluss des Hydraulikleitungsanschlusses von Fig. 1.
- Fig. 10: zeigt eine Teilseitenansicht der Hydraulickomponente von Fig. 9 mit einer Dichtungsvorrichtung.
- Fig. 11: zeigt eine Detailansicht der Teilschnittansicht der Hydraulikkomponente von Fig. 9 mit einer Dichtungsvorrichtung.
- Fig. 12: zeigt eine Querschnittansicht durch den Fortsatz der Leitungsbefestigungsvorrichtung des Hydraulikleitungsanschlusses von Fig. 1.
- Fig. 13: zeigt eine Querschnittansicht durch den Befestigungsabschnitt der Leitungsbefestigungsvorrichtung des Hydraulikleitungsanschlusses von Fig. 1.
- Fig. 14: zeigt eine der Fig. 12 entsprechende Querschnittansicht durch den Fortsatz der Leitungsbefestigungsvorrichtung eines Hydraulikleitungsanschlusses gemäß einer weiteren Ausführung der Erfindung.
- Fig. 15: zeigt eine Querschnittansicht durch den Befestigungsabschnitt der Leitungsbefestigungsvorrichtung des Hydraulikleitungsanschlusses von Fig. 14.
- Fig. 16: zeigt eine der Fig. 12 entsprechende Querschnittansicht durch den Fortsatz der Leitungsbefestigungsvorrichtung eines Hydraulikleitungsanschlusses gemäß einer weiteren Ausführung der Erfindung.
- Fig. 17: zeigt eine Querschnittansicht durch den Befestigungsabschnitt der Leitungsbefestigungsvorrichtung des Hydraulikleitungsanschlusses von Fig. 16.
- Fig. 18: zeigt eine Querschnittsansicht einer Hydraulikleitungsanschluss- und Hydraulikkomponentenbefestigungsvorrichtung gemäß einem Beispiel, das nicht durch die Erfindung im Sinne der Ansprüche abgedeckt ist.

- Fig. 19: zeigt eine Detailansicht der Hydraulikleitungsanschluss- und Hydraulikkomponentenbefestigungsvorrichtung von Fig. 18.
- Fig. 20: zeigt eine Schnittansicht der Hydraulikleitungsanschluss- und Hydraulikkomponentenbefestigungsvorrichtung von Fig. 18 entlang der Linien XX-XX von Fig. 19.
- Fig. 21: zeigt eine perspektivische teilweise freigeschnittene Ansicht der Hydraulikleitungsanschluss- und Hydraulikkomponentenbefestigungsvorrichtung von Fig. 18 von schräg oben.
- Fig. 22: zeigt eine perspektivische Ansicht der Hydraulikleitungsanschluss- und Hydraulikkomponentenbefestigungsvorrichtung von Fig. 18 von schräg oben.
- Fig. 23: zeigt eine der Fig. 22 entsprechende Ansicht der Hydraulikleitungsanschluss- und Hydraulickomponentenbefestigungsvorrichtung von Fig. 18 bei der Montage.
- Fig. 24: zeigt eine Ansicht der Hydraulikleitungsanschluss- und Hydraulikkomponentenbefestigungsvorrichtung von Fig. 18 von oben.
- Fig. 25: zeigt eine perspektivische Teilansicht der Hydraulikleitungsanschluss- und Hydraulikkomponentenbefestigungsvorrichtung von Fig. 18 von schräg seitlich, oben und vorne.
- Fig. 26: zeigt eine Querschnittsansicht einer Hydraulikleitungsanschluss- und Hydraulikkomponentenbefestigungsvorrichtung gemäß einem weiteren Beispiel, das nicht durch die Erfindung im Sinne der Ansprüche abgedeckt ist.
- Fig. 27: zeigt eine Detailansicht der Hydraulikleitungsanschluss- und Hydraulikkomponentenbefestigungsvorrichtung von Fig. 26.
- Fig. 28: zeigt eine Querschnittsansicht einer Hydraulikleitungsanschluss- und Hydraulikkomponentenbefestigungsvorrichtung gemäß einem weiteren Beispiel, das nicht durch die Erfindung im Sinne der Ansprüche abgedeckt ist.
- Fig. 29: zeigt eine Detailansicht der Hydraulikleitungsanschluss- und Hydraulikkomponentenbefestigungsvorrichtung von Fig. 28.
- Fig. 30: zeigt eine Schnittansicht der Hydraulikleitungsanschluss- und Hydraulikkomponentenbefestigungsvorrichtung von Fig. 28 entlang der Linien XXX-XXX von Fig. 29.
- Fig. 31: zeigt eine Querschnittsansicht einer Hydraulikleitungsanschluss- und Hydraulikkomponentenbefestigungsvorrichtung gemäß einem weiteren Beispiel, das nicht durch die Erfindung im Sinne der Ansprüche abgedeckt ist.
- Fig. 32: zeigt eine Querschnittsansicht einer Hydraulikleitungsanschluss- und Hydraulikkomponentenbefestigungsvorrichtung gemäß einem weiteren Beispiel, das nicht durch die Erfindung im Sinne der Ansprüche abgedeckt ist.

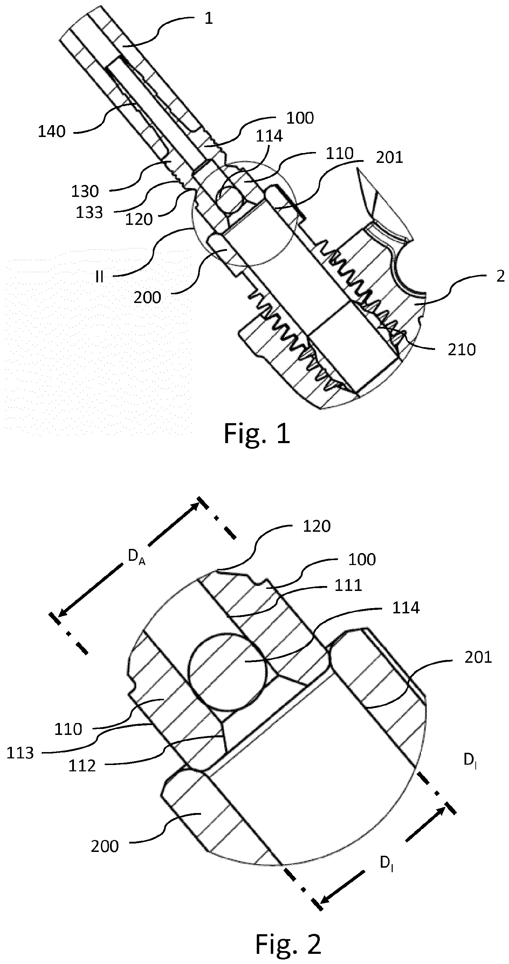

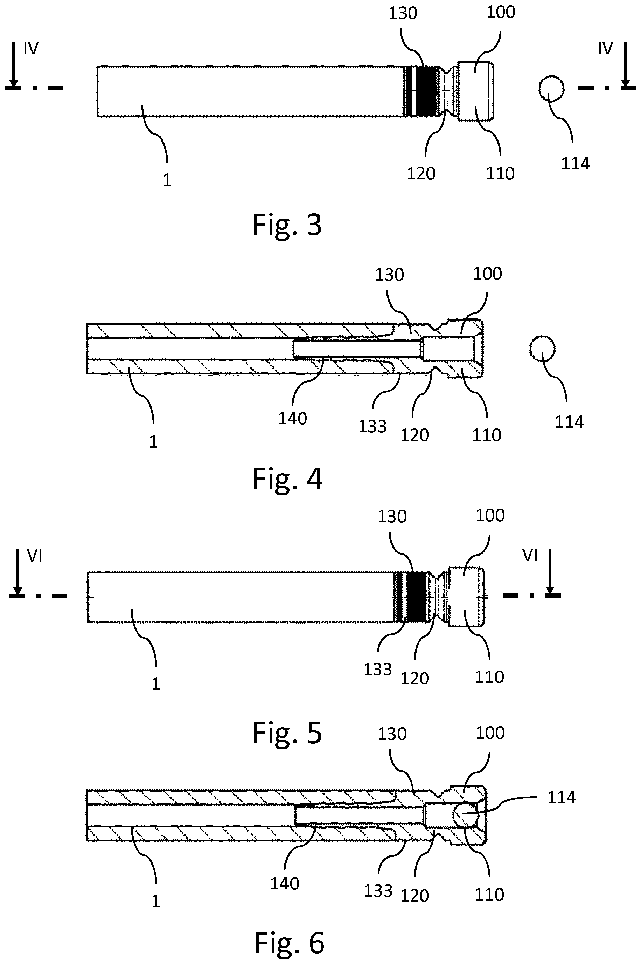

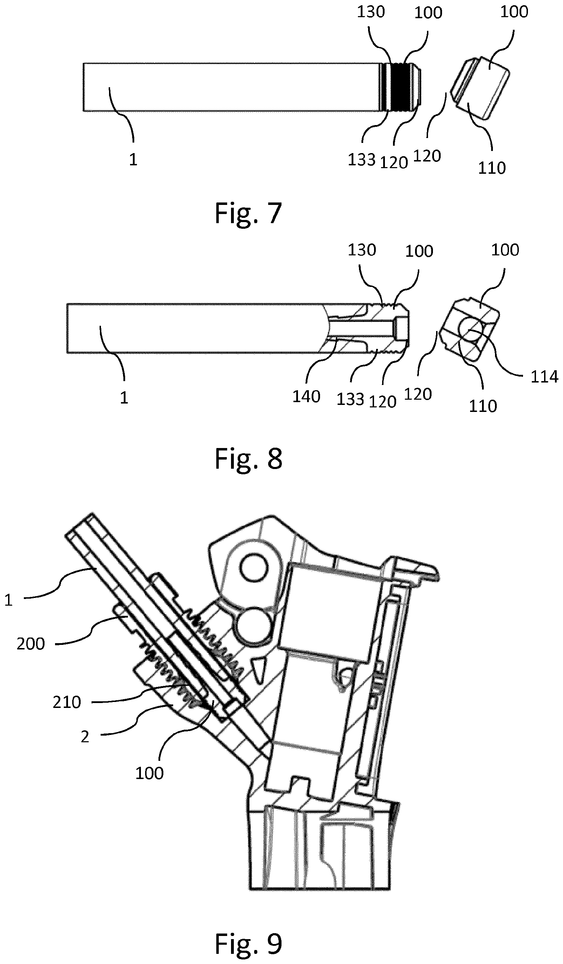

Die Figuren 1 bis 13 zeigen einen Hydraulikleitungsanschluss gemäß einer Ausführung der Erfindung.

Der Hydraulikleitungsanschluss umfasst eine Leitungsbefestigungsvorrichtung 100 zur Befestigung einer Hydraulikleitung 1 an einer Hydraulikkomponente 2. Die Leitungsbefestigungsvorrichtung 100 umfasst einen Fortsatz 110, eine Trenneinrichtung 120, einen Befestigungsabschnitt 130 und einen Verbindungsabschnitt 140.

Die Leitungsbefestigungsvorrichtung 100 weist einen Durchgang auf, dessen freier Querschnitt im Wesentlichen dem freien Querschnitt der zu befestigenden Hydraulikleitung 1 entspricht.

Der Verbindungsabschnitt 140 kann einen Stutzen umfassen, der mit einer Presspassung in die Hydraulikleitung auf eine dem Fachmann bekannte Weise eingebracht wird. Die Oberfläche des Stutzens umfasst eine widerhackenartige Oberflächenkontur, die den Stutzen bei üblichen Arbeitsdrücken hinreichend gegen ein Herausrutschen aus der Hydraulikleitung 1 sichert.

Der Befestigungsabschnitt 130 umfasst eine Außenwandung, deren Außenwandung 133 an die Oberfläche 201 einer Innenwandung einer Aufnahmeeinrichtung 200 der Hydraulikkomponente 2 angepasst, an die die Hydraulikleitung 1 angeschlossen werden soll. In der Regel weist die Außenwandung 133 die Form einer Zylinderhülle auf, wobei umlaufende Rillen vorgesehen sind. Derartige Befestigungsabschnitte sind dem Fachmann auf dem Gebiet der Hydraulikleitungsanschlüsse bekannt, und zwar von Leitungsbefestigungsvorrichtungen zum Befestigen von Leitungen an hydraulischen Fahrradfelgenbremsen und/oder hydraulischen Fahrradscheibenbremsen, die im Gegensatz zu der Erfindung keinen Fortsatz aufweisen, sondern nur den Befestigungsabschnitt 130 und den Verbindungsabschnitt 140.

Der Fortsatz 110 ist mit dem Befestigungsabschnitt 130 über eine Trenneinrichtung 120 verbunden, die als Sollbruchstelle ausgebildet ist. Bei der gezeigten Ausführung ist die Trenneinrichtung 120 als Verjüngung, Rille bzw. Einschnitt ausgebildet. Mit einem geeigneten Werkzeug kann der Fortsatz 110 von dem Befestigungsabschnitt 130 getrennt werden.

Der Fortsatz 110 weist ebenfalls einen Durchgang auf der von einer Innenwandung 111 des Fortsatzes begrenzt wird. Zum Befüllen der Hydraulikleitung 1 bzw. der hydraulischen Betätigungsvorrichtung kann die Hydraulikleitung 1 und die Hydraulikkomponente (Geber/Nehmer) an ihrem anderen Ende durch den Fortsatz 110 befüllt werden. Sobald das System auf dem Fachmann bekannte Weise befüllt und entlüftet ist, kann der Bediener den Fortsatz verschließen und hydraulisch abdichten, indem er eine Dichtungseinrichtung 114 in den Durchgang einbringt. Dazu kann beispielsweise als Dichtungseinrichtung 114 eine Kugel in den Durchgang eingepresst werden, so dass der Durchgang durch die Presspassung zwischen Kugel und Innenwandung 111 verschlossen wird. Damit die Dichteinrichtung 114 leichter in den Durchgang eingebracht werden kann, kann am Anfang des Durchgangs eine Phase 112 vorgesehen sein.

Die Hydraulikleitung kann eine verstärkte oder nicht verstärkte Hydraulikleitung umfassen. Der Fachmann kennt deren Einsatzgebiete und wird die geeignete Hydraulikleitung auswählen.

Die Hydraulikkomponente 2 kann beispielsweise eine Gebervorrichtung oder eine Nehmervorrichtung einer hydraulischen Bremse oder Kupplung bzw. einer sonstigen Betätigungsvorrichtung eines lenkergeführten Fahrzeugs sein. Die Hydraulikkomponente 2 kann auch ein Adapter sein, der beispielsweise Teil einer Lenkeranordnung sein kann. Ebenso kann die Hydraulikkomponente 2 eine Verbindungsvorrichtung zur Verbindung von zwei Hydraulikleitungsabschnitten sein, wie beispielsweise eine Leitungskupplungsvorrichtung.

Die Hydraulikkomponente 2 weist einen Hydraulikleitungsanschluss auf, der als Gewindebohrung ausgebildet ist. In der Gewindebohrung ist eine Aufnahmeeinrichtung 200 eingeschraubt, die beispielweise eine Überwurfschraube sein kann. Die Aufnahmeeinrichtung 200 weist eine Innenwandung 201 auf, deren Form der Außenwandung 133 des Befestigungsabschnitts 130 der Leitungsbefestigungsvorrichtung 100 entspricht.

Der Außendurchmesser D_{A} der Außenwandung 113 des Fortsatzes 110 ist größer als der Innendurchmesser DI der Innenwandung 201 der Aufnahmeeinrichtung 200, wie in Fig. 2 gezeigt. Dadurch wird sichergestellt, dass nicht versehentlich die Leitungsverbindungsvorrichtung 100 an der Aufnahmeeinrichtung 200 befestigt wird, ohne dass der Fortsatz 110 vorher an der Trenneinrichtung 120 abgetrennt wurde, so dass der Befestigungsabschnitt 130 in die Aufnahmeeinrichtung 200 eingesetzt werden kann.

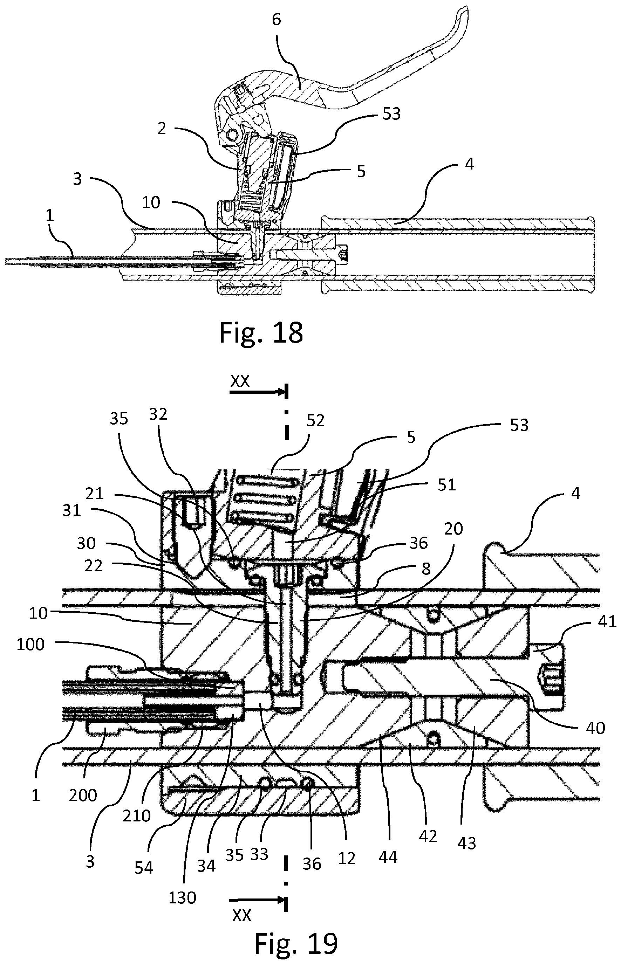

Zum Befestigen des Befestigungsabschnitts 130 in der Aufnahmeeinrichtung 200 wird zunächst eine Klemmeinrichtung 210 in den Hydraulikanschluss der Hydraulikkomponente 2 eingesetzt. Dann wird die Aufnahmeeinrichtung 200 auf die Leitungsbefestigungsvorrichtung 100 geschoben, die bereits mit der Hydraulikleitung über den Verbindungsabschnitt 140 verbunden ist, der innen in die Hydraulikleitung eingreift. Dann wird die Aufnahmeeinrichtung 200 mit der Leitungsbefestigungsvorrichtung in den Hydraulikleitungsanschluss eingesetzt, so dass die Klemmeinrichtung 210 den Befestigungsabschnitt 130 umschließt. Danach wird die Aufnahmeeinrichtung 200 in den Hydraulikleitungsanschluss geschraubt, so dass die Klemmeinrichtung 210 zusammengedrückt wird und eine druckdichte Verbindung ausbildet, wie z.B. in Fig. 19 am Beispiel eines Adapters gezeigt, der in einem Lenkerrohr 3 angeordnet ist.

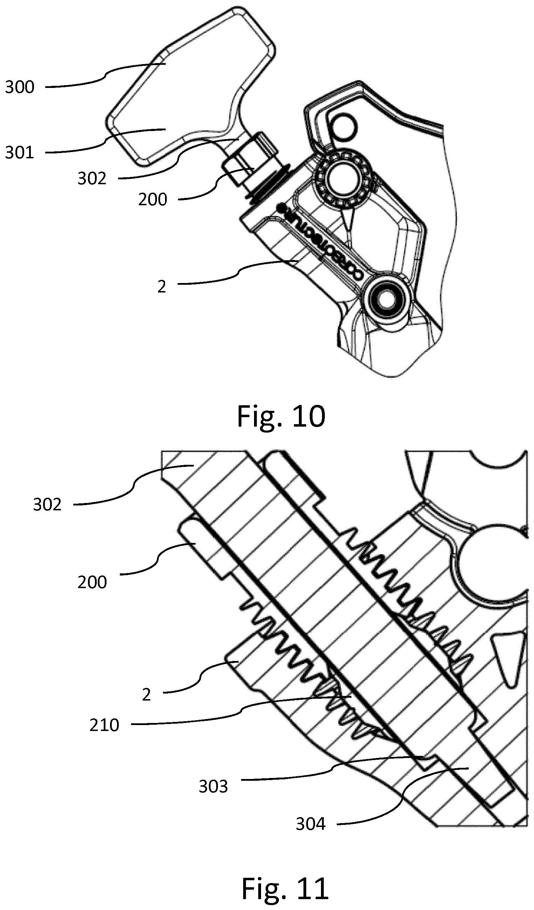

Die Hydraulikkomponente, an die der mit Hydraulikflüssigkeit vorbefüllte Hydraulikleitungsanschluss mit der Hydraulikleitung angeschlossen werden soll, muss dem Benutzer auch vorbefüllt geliefert werden, damit nach dem Anschließen ein aufwendiges Nachfüllen und Entlüften möglichst vollständig vermieden werden kann. Dazu wird die Hydraulikkomponente mit Hydraulikflüssigkeit auf eine dem Fachmann bekannte Weise befüllt und entlüftet. Um einen Austritt von Hydraulikflüssigkeit zu vermeiden, wird die Hydraulikkomponente mit einer Dichtungsvorrichtung 300 verschlossen, die als Stopfen ausgebildet sein kann, wie in den Figuren 10 und 11 gezeigt.

Die Dichtungsvorrichtung 300 weist einen Griffabschnitt 301 auf, an dem der Bediener angreifen kann, um die Dichtungsvorrichtung 300 in die Aufnahmeeirichtung 200 einsetzen und diese daraus entfernen zu können. Zur Sicherung kann die Aufnahmeeinrichtung wie bei der Befestigung der Leitungsbefestigungsvorrichtung 100 in der Aufnahmeeinrichtung 200 in das Gewinde des Hydraulikanschlusses eingedreht werden, so dass die Klemmeinrichtung 210 hinreichend gepresst wird, um eine sichere Abdichtung zu gewährleisten.

Die Dichtungsvorrichtung 300 weist einen Schaftabschnitt 302 auf, dessen Außendurchmesser im Wesentlichen demjenigen der Hydraulikleitung 1 bzw. der Leitungsbefestigungsvorrichtung 100 entspricht. An den Schaftabschnitt 302 schließt sich ein Übergangsabschnitt 303 an, der in einen Konusabschnitt 304 übergeht, der entsprechend einem Luer-Konus in den Hydraulikanschluss eingreift und eine Abdichtung schafft.

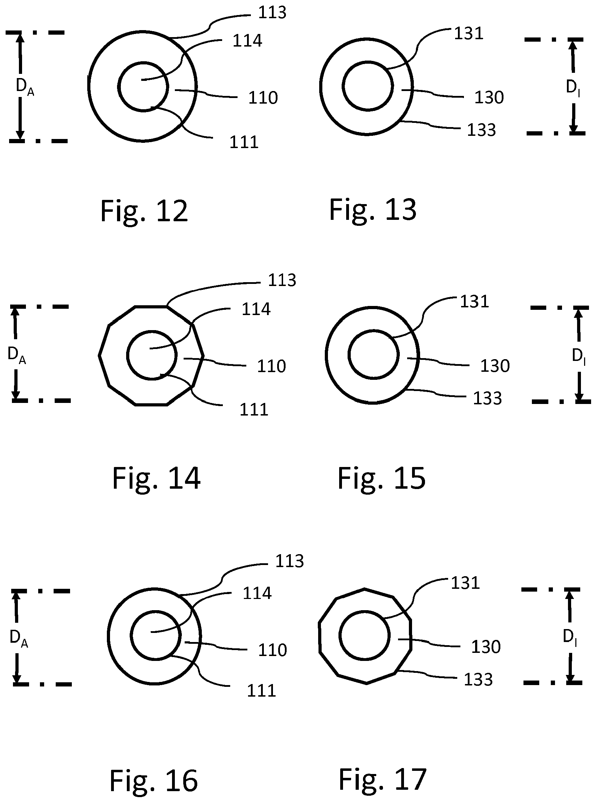

Die Figuren 14 und 15 zeigen eine weitere Ausführung der Erfindung, die im Wesentlichen der in den Figuren 1 bis 13 gezeigten und im Zusammenhang damit beschriebenen Ausführung der Erfindung entspricht. Daher werden im Folgenden nur die Unterschiede zu der dort gezeigten und beschriebenen Ausführung beschrieben und in den Figuren 14 und 15 gezeigt. Im Übrigen wird auf die Beschreibung und die Zeichnungen der ersten Ausführung verwiesen, wobei die gleichen Bezugszeichen gleiche bzw. entsprechende Bauteile bzw. Merkmale bezeichnen.

Bei der Ausführung der Figuren 14 und 15 weist der Befestigungsabschnitt 130 eine Außenwandung 133 auf, die im Wesentlichen zylinderwandförmig ist. Die Außenwandung 113 des Fortsatzes 110 ist im Querschnitt achteckig ausgebildet, weist aber im Außenkreis einen Durchmesser auf, der größer als der Durchmesser Außenwandung 133 des Befestigungsabschnitts 130 ist, der dem Innendurchmesser D_{I} der Aufnahmeeinrichtung 200 entspricht. Daher entspricht zwar der Abstand D_{A} der parallelen Flächen der Außenwandung 113 dem Innendurchmesser D_{I} der Aufnahmeeinrichtung 200. Die größte Abmessung entspricht aber im Querschnitt dem Außenkreis des Achtecks und ist somit größer als der Innendurchmesser D_{I} der Aufnahmeeinrichtung 200. Somit kann der Fortsatz 110 nicht in die Aufnahmeeinrichtung 200 eingeführt werden und der Bediener merkt, dass er den Fortsatz 110 mit der darin angeordneten Dichtungseinrichtung 114 von der Leitungsbefestigungsvorrichtung 100 entfernen muss, um diese dann ohne Fortsatz 110 in der Aufnahmeeinrichtung 200 anordnen zu können.

Die Figuren 16 und 17 zeigen eine weitere Ausführung der Erfindung, die im Wesentlichen der in den Figuren 1 bis 13 bzw. 14 und 15 gezeigten und im Zusammenhang damit beschriebenen Ausführungen der Erfindung entspricht. Daher werden im Folgenden nur die Unterschiede zu den dort gezeigten und beschriebenen Ausführungen beschrieben und in den Figuren 16 und 17 gezeigt. Im Übrigen wird auf die Beschreibung und die Zeichnungen der anderen Ausführungen verwiesen, wobei die gleichen Bezugszeichen gleiche bzw. entsprechende Bauteile bzw. Merkmale bezeichnen.

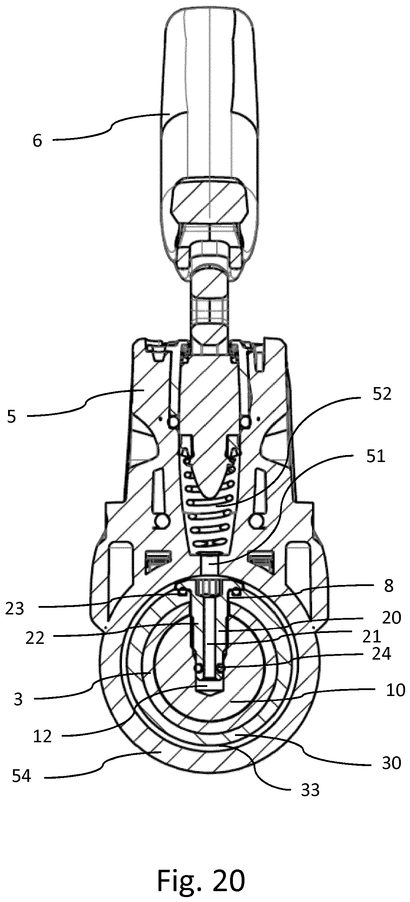

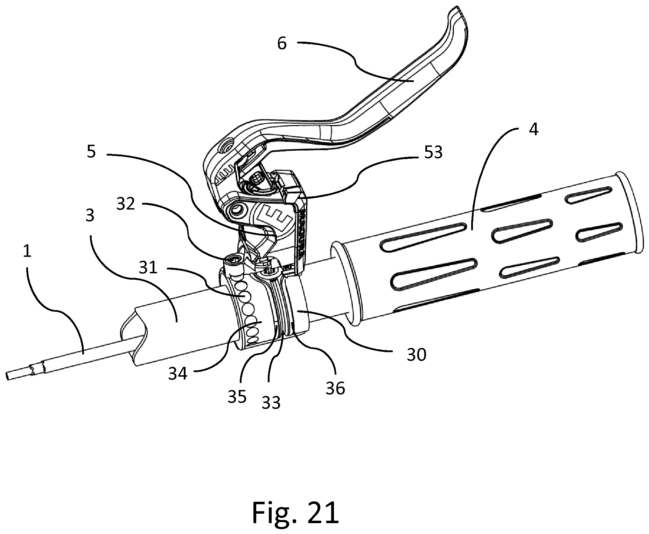

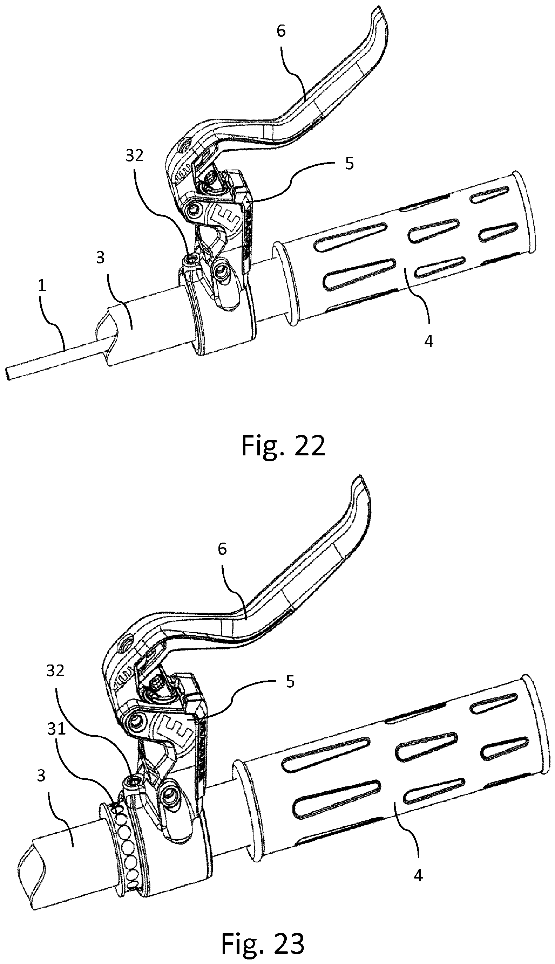

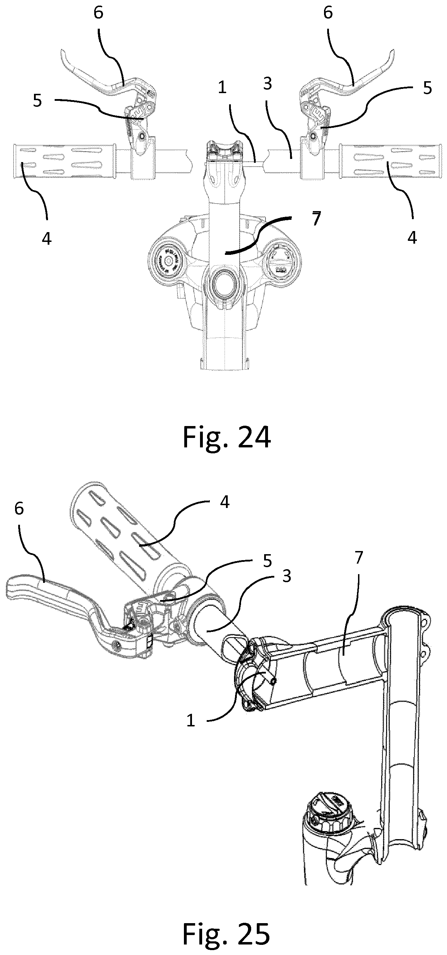

Bei dieser Ausführung weist die Aufnahmeeinrichtung 200 eine Innenwandung auf, die im Querschnitt eine achteckige Form hat. Der Innendurchmesser D_{I} (gemessen von Ecke zu gegenüberliegender Ecke), d.h. der Außenkreis im Querschnitt, entspricht dem Außendurchmesser D_{A} der Außenwandung 113 des Fortsatzes 110. Wegen der fehlenden Abflachungen am Fortsatz 110 kann auch bei dieser Ausführung der Erfindung der Fortsatz 110 nicht in die Aufnahmeeinrichtung 200 eingeführt werden und der Bediener merkt, dass er den Fortsatz 110 mit der darin angeordneten Dichtungseinrichtung 114 von der Leitungsbefestigungsvorrichtung 100 entfernen muss, um diese dann ohne Fortsatz 110 in der Aufnahmeeinrichtung 200 anordnen zu können. Die Figuren 18 bis 25 zeigen eine Hydraulikleitungsanschluss- und Hydraulikkomponentenbefestigungsvorrichtung gemäß einem Beispiel, das nicht durch die Erfindung im Sinne der Ansprüche abgedeckt ist. Die Hydraulikleitungsanschluss- und Hydraulikkomponentenbefestigungsvorrichtung umfasst eine Hydraulikleitungsanschlusseinrichtung 10, an der eine Hydraulikleitung 1 befestigt, ist, sowie eine Hydraulikverbindungseinrichtung 20 und eine Hydraulikkomponentenbefestigungseinrichtung 30. Hydraulikleitungsanschlusseinrichtung 10 ist innerhalb eines Lenkerrohrs 3 angeordnet, auf dem ein Griffrohr 4 vorgesehen sein kann. Die Hydraulikleitungsanschlusseinrichtung 10 weist einen Hydraulikleitungsanschluss 11 auf, der über einen Verbindungskanal 12 mit der Hydraulikverbindungseinrichtung 20 verbunden ist.

Die Hydraulikkomponentenbefestigungseinrichtung 30 ist außen an dem Lenkerrohr angeordnet. An der Hydraulikkomponentenbefestigungseinrichtung 30 ist die Geberarmatur 5 befestigt. Die Hydraulikverbindungseinrichtung 20 verbindet die Hydraulikkomponentenbefestigungseinrichtung 30 mit der Hydraulikleitungsanschlusseinrichtung 10. Dazu greift die Hydraulikverbindungseinrichtung 20 in die Hydraulikleitungsanschlusseinrichtung 10 ein, erstreckt sich durch eine Aussparung 8 in dem Lenkerrohr 3 und greift an der Hydraulikkomponentenbefestigungseinrichtung 30 an.

Die Aussparung 8 in dem Lenkerrohr 3 ist als Langloch ausgebildet, so dass die Hydraulikkomponentenbefestigungseinrichtung 30 über einen Weg, der der Länge des Langlochs abzüglich der Abmessung (des Platzbedarfs) der Hydraulikverbindungseinrichtung 20 entspricht, in einer gewünschten Einstellung an dem Lenkerrohr 3 anordbar ist.

Die Hydraulikkomponentenbefestigungseinrichtung 30 umfasst eine Ringaufnahme 34, die sich um das Lenkerrohr 3 herum erstreckt. Auf der bezogen auf das Fahrzeug inneren Seite sind Aussparungen 31 angeordnet, in die eine Drehsicherungseinrichtung 32 eingreifen kann, um die auf der Hydraulickomponentenbefestigungseinrichtung 30 montierte Hydraulickomponente 2 in einer gewünschten Drehstellung zu sichern.

Die Geberarmatur weist einen Druckraum 52 auf, an dessen unterem Ende, d.h. dem Lenkerrohr nahen Ende ein Verbindungskanal 51 vorgesehen ist, der mit dem Verbindungskanal 33 in der Hydraulikkomponentenbefestigungseinrichtung 30 verbunden ist. An der Seite des Gehäuses 5 ist ein Ausgleichsbehälter 53 vorgesehen.

Der Verbindungskanal 33 erstreckt sich über den gesamten Umfang der Ringaufnahme 34, so dass die Hydraulikkomponente 2 in einer beliebigen Drehstellung montiert werden kann, wobei eine Hydraulikverbindung zwischen dem Verbindungskanal 51 und der Verbindungskanal 33 gewährleistet ist.

Die Hydraulikverbindungseinrichtung 20 umfasst einen Bolzen 22 in dem ein Verbindungskanal 21 vorgesehen ist. Der Verbindungskanal 21 steht in Verbindung mit dem Verbindungskanal 33 und einem Verbindungskanal 12 in der Hydraulikleitungsanschlusseinrichtung 10.

Der Kopf des Bolzens 22 ist mit einer Dichtung 23 gegenüber der Hydraulikkomponentenbefestigungseinrichtung 30 abgedichtet, und das untere Ende des Bolzens 22 ist mit einer Dichtung 24 gegenüber der Hydraulikleitungsanschlusseinrichtung 10 abgedichtet.

Der Verbindungskanal 33 ist an seinen beiden Seiten mit Dichtungen 35, 36 abgedichtet, die in Nuten angeordnet sind, die auf der Oberfläche der Hydraulikkomponentenbefestigungseinrichtung 30 ausgebildet sind.

Die Hydraulikkomponente 2 weist ein Gebergehäuse 5 auf, das mit einem Befestigungsabschnitt 54 an der Hydraulickomponentenbefestigungseinrichtung 30 angeordnet ist, und zwar mit einer Presspassung, so dass einerseits eine Drehung um den Lenker möglich ist, und andererseits eine Abdichtung zwischen dem Befestigungsabschnitt 54 und der davon umschlossenen Hydraulikkomponentenbefestigungseinrichtung 30 über die Dichtungen 35, 36 möglich ist.

Des Weiteren ist eine Befestigungsanordnung 40 vorgesehen, mit der die axiale Lage der Hydraulikkomponente 2 auf dem Lenker gesichert werden kann. Die Befestigungsanordnung 40 umfasst einen Bolzen 41, der sich durch einen Konusring 43 erstreckt und in die Hydraulikleitungsanschlusseinrichtung 10 eingreift. Die Hydraulikleitungsanschlusseinrichtung 10 umfasst auf der Seite, in die der Bolzen eingreift, eine Konusfläche 44, die der Konusfläche des Konusrings 43 entspricht. Auf diesen Konusflächen ist ein Konusring 42 angeordnet. Durch Drehen des Bolzens 41 in das Gewinde der Hydraulikleitungsanschlusseinrichtung 10 wird der Konusring 42 radial nach außen verspannt, so dass die Hydraulikleitungsanschlusseinrichtung 10 durch den Reibschluss axial in Position fixiert wird.

Zur Montage wird zunächst Hydraulikleitungsanschlusseinrichtung 10 mit der Hydraulikleitung 1 verbunden und in das Lenkerrohr 3 eingeführt. Dann wird die Hydraulickomponentenbefestigungseinrichtung 30 außen auf dem Lenkerrohr 3 angeordnet und mit der Hydraulikverbindungseinrichtung 20 an einer gewünschten Position fixiert, in dem diese durch die Aussparung 8 in dem Lenkerrohr 3 gesteckt und in die Hydraulikleitungsanschlusseinrichtung 10 geschraubt wird. Davor oder auch danach wird die Befestigungsanordnung 40 angezogen. Anschließend wird die Hydraulikkomponente 2 auf der Hydraulikkomponentenbefestigungseinrichtung 30 angeordnet und in die gewünschte Stellung gedreht. Schließlich wird die Drehstellung mit der Drehsicherungseinrichtung 32 gesichert, indem diese festgezogen wird.

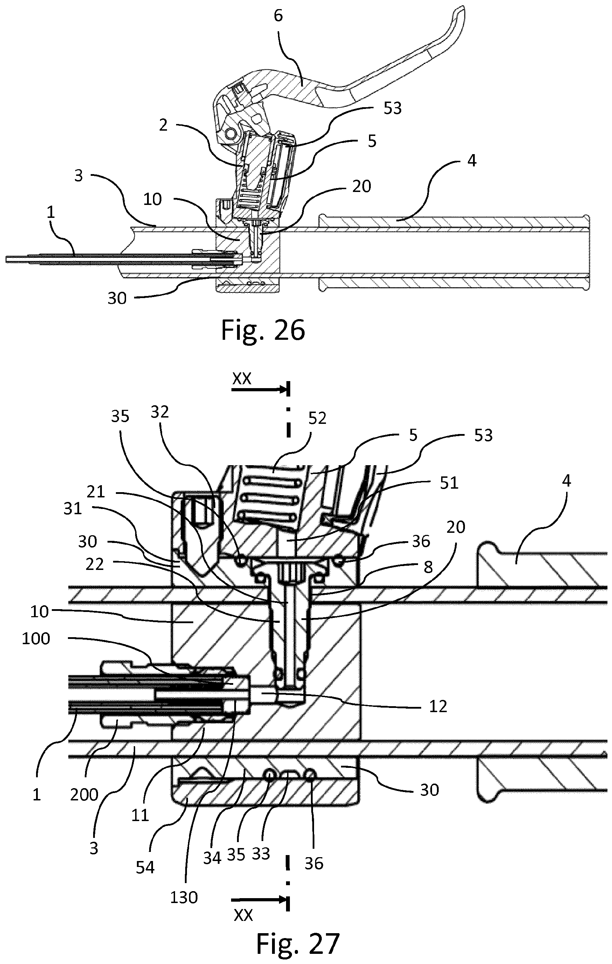

Die Figuren 26 bis 27 zeigen ein weiteres Beispiel, das nicht durch die Erfindung im Sinne der Ansprüche abgedeckt ist, das im Wesentlichen dem in den Figuren 18 bis 25 gezeigten und im Zusammenhang damit beschriebenen Beispiel entspricht. Daher werden im Folgenden nur die Unterschiede zu dem dort gezeigten und beschriebenen Beispiel beschrieben und in den Figuren 26 bis 27 gezeigt. Im Übrigen wird auf die Beschreibung und die Zeichnungen des anderen Beispiels verwiesen, wobei die gleichen Bezugszeichen gleiche bzw. entsprechende Bauteile bzw. Merkmale bezeichnen.

Bei dem in den Figuren 26 bis 27 gezeigten Beispiel ist die Aussparung 8 als Loch ausgeführt, dessen Abmessung der Abmessung der Hydraulikverbindungseinrichtung 20 entspricht. Daher kann die Hydraulikkomponentenbefestigungseinrichtung 30 nur an einer bestimmten geeigneten Stelle an dem Lenkerrohr befestigt werden. Bei diesem Beispiel kann aber die Befestigungsanordnung 40, wie gezeigt, entfallen, denn die axiale Sicherung erfolgt durch die in der Aussparung 8 angeordnete Hydraulikverbindungseinrichtung 20, die eine Verschiebung der Hydraulikkomponente 2 in Axialrichtung verhindert. Dadurch kann dieses Beispiel leichter ausgebildet werden.

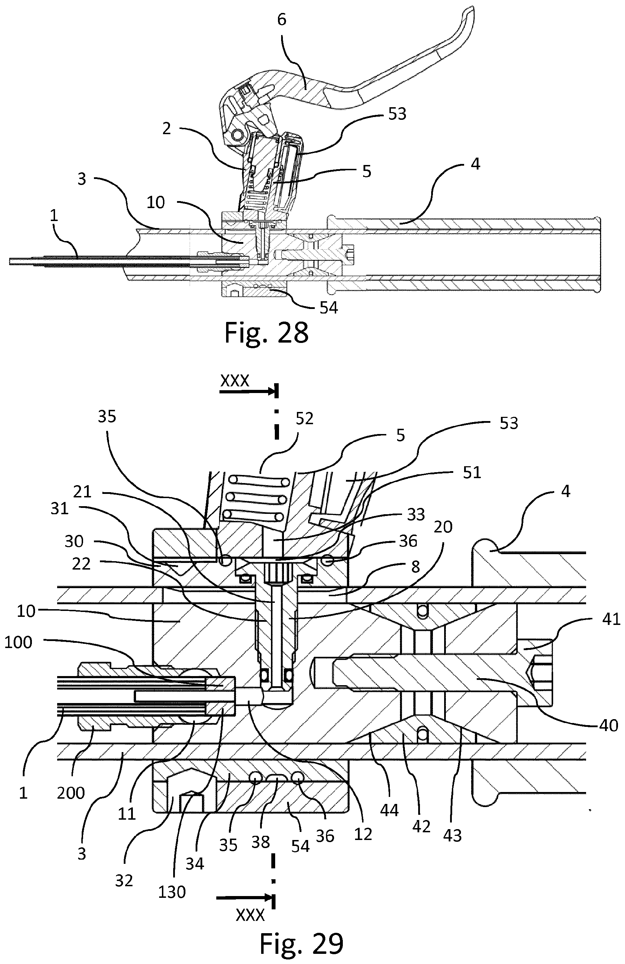

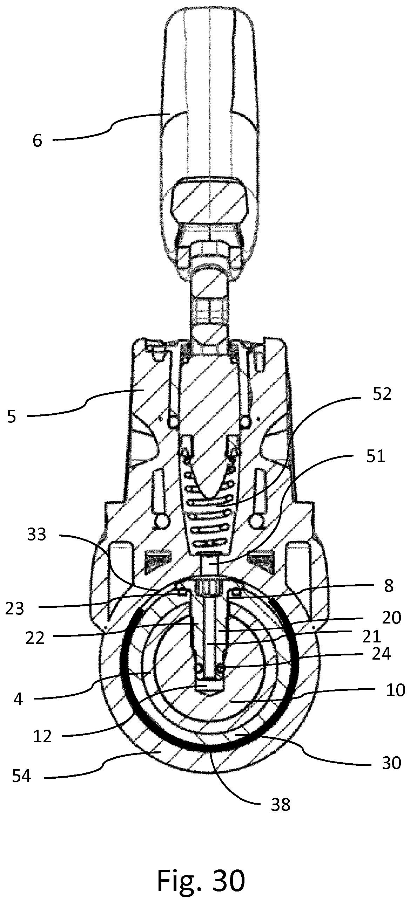

Die Figuren 28 bis 30 zeigen ein weiteres Beispiel, das nicht durch die Erfindung im Sinne der Ansprüche abgedeckt ist, das im Wesentlichen der in den Figuren 18 bis 25 bzw. 26 und 27 gezeigten und im Zusammenhang damit beschriebenen Beispiele entspricht. Daher werden im Folgenden nur die Unterschiede zu den dort gezeigten und beschriebenen. Beispiele beschrieben und in den Figuren 28 bis 30 gezeigt. Im Übrigen wird auf die Beschreibung und die Zeichnungen der anderen Beispiele verwiesen, wobei die gleichen Bezugszeichen gleiche bzw. entsprechende Bauteile bzw. Merkmale bezeichnen.

Bei dem in den Figuren 28 bis 30 gezeigten Beispiel ist die Drehsicherungseinrichtung 32 an der dem Druckraum 52 gegenüberliegenden Seite der Hydraulikkomponentenbefestigungseinrichtung 30 angeordnet. Weiterhin ist eine Dichtung 38 in einem Bereich des Verbindungskanals 33 angeordnet, der sich über ungefähr 270° des Umfangs erstreckt. Dieses Beispiel hat den Vorteil, dass die Dichtungswirkung verstärkt wird, wenn die Drehsicherungseinrichtung 32 nach erfolgter Einstellung des gewünschten Drehwinkels der Armatur wieder festgezogen wird.

Bei diesem Beispiel kann die Aussparung entsprechend des Beispiels der Figuren 26 bis 27 ausgebildet werden, so dass die Befestigungsanordnung 40 entfallen kann.

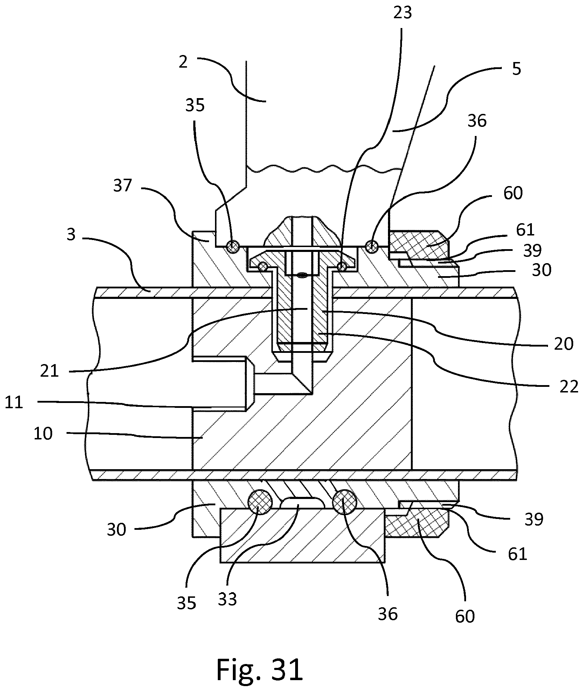

Figur 31 zeigt ein weiteres Beispiel, das nicht durch die Erfindung im Sinne der Ansprüche abgedeckt ist, das im Wesentlichen der in den Figuren 18 bis 25 bzw. 26 und 27 bzw. 28 bis 30 gezeigten und im Zusammenhang damit beschriebenen Beispiele entspricht. Daher werden im Folgenden nur die Unterschiede zu den dort gezeigten und beschriebenen Beispiele beschrieben und in der Figur 31 gezeigt. Im Übrigen wird auf die Beschreibung und die Zeichnungen der anderen Beispiele verwiesen, wobei die gleichen Bezugszeichen gleiche bzw. entsprechende Bauteile bzw. Merkmale bezeichnen.

Bei diesem Beispiel wird die Hydraulikkomponente 2 auf Hydraulikkomponentenbefestigungseinrichtung 30 geschoben bis sie seitlich gegen einen Anschlag 37 stößt. Anschließend wird auf der dem Anschlag gegenüberliegenden Seite ein Klemmring 60 mit einem Innengewinde 61 auf ein auf der Hydraulikkomponentenbefestigungseinrichtung 30 ausgebildetem Außengewinde 39 geschraubt, so dass die Hydraulikkomponente 2 zwischen dem Anschlag 37 und dem Klemmring 60 verspannt ist.

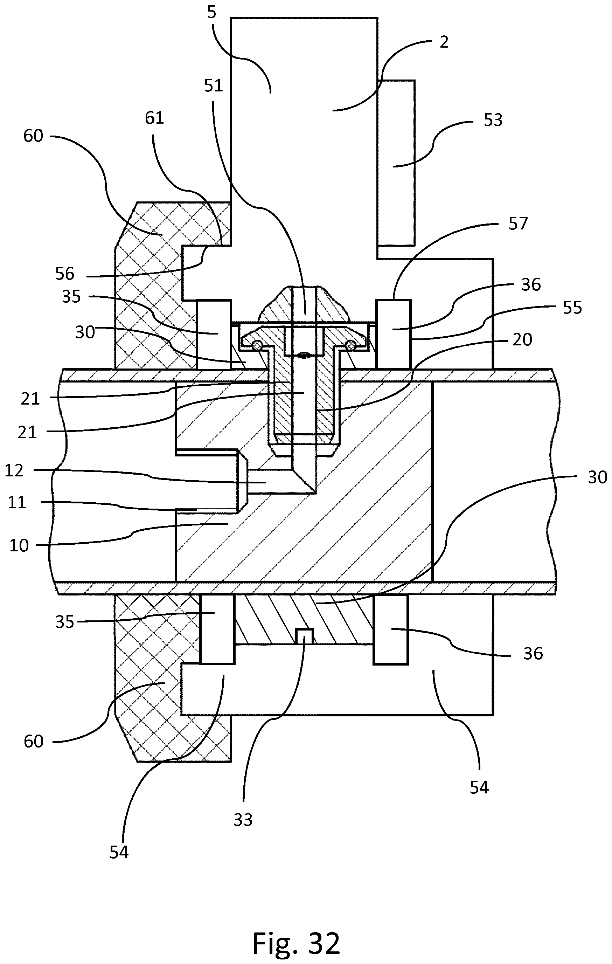

Figur 32 zeigt ein weiteres Beispiel, das nicht durch die Erfindung im Sinne der Ansprüche abgedeckt ist, das im Wesentlichen der in den Figuren 18 bis 25 bzw. 26 und 27 bzw. 28 bis 30 bzw. 31 gezeigten und im Zusammenhang damit beschriebenen Beispiele entspricht. Daher werden im Folgenden nur die Unterschiede zu den dort gezeigten und beschriebenen Beispiele beschrieben und in der Figur 32 gezeigt. Im Übrigen wird auf die Beschreibung und die Zeichnungen der anderen Beispiele verwiesen, wobei die gleichen Bezugszeichen gleiche bzw. entsprechende Bauteile bzw. Merkmale bezeichnen.

Bei diesem Beispiel sind die Dichtungen 35 und 36 als Quetschdichtungen ausgebildet, die auf beiden Seiten der Hydraulikkomponentenbefestigungseinrichtung 30 angeordnet sind. Das Gehäuse 5 weist auf der rechten Seite einen Anschlag 55 auf, der gegen die rechte Dichtung 36 drückt, die in einer optionalen Nut 57 aufgenommen sein kann, die in dem Gehäuse ausgebildet ist. Auf der linken Seite weist das Gehäuse 5 ein Außengewinde 56 auf, auf das ein Klemmring 60 mit einem Innengewinde 61 geschraubt werden kann, der die linke Dichtung 35 gegen das Gehäuse 5 und die Hydraulikkomponentenbefestigungseinrichtung 30 drückt. Beim Anziehen des Klemmrings 60 werden die Dichtungen 35, 36 gequetscht und dehnen sich radial außen aus, so dass eine hinreichende Abdichtung für den Betrieb der Hydraulikkomponente 2 erreicht wird.

Zur Montage wird zunächst der Klemmring 60 mit der Dichtung 35 auf das Lenkerrohr 3 geschoben. Dann wird die Hydraulikkomponentenbefestigungseinrichtung 30 an dem Lenkerrohr 3 befestigt. Dann wird die Hydraulikkomponente 2 mit der Dichtung 36 auf das Lenkerrohr 3 geschoben und auf der Hydraulikkomponentenbefestigungseinrichtung 30 angeordnet. Dann kann der Klemmring 60 angezogen werden, nachdem die gewünschte Drehstellung eingestellt wurde.

Bei den Beispielen der Figuren 31 und 32 sind die Hydraulikleitungsanschlusseinrichtung 10 und der Hydraulikleitungsanschluss 11 dargestellt, in der bzw. in dem die Leitungsbefestigungsvorrichtung 100, wie beispielsweise in Fig. 19 bzw. Fig. 29 gezeigt, zum Anschluss der Hydraulikleitung 1 angeordnet sein kann.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Hydraulikleitungsanschluss für eine hydraulische Bremse lenkergeführter Fahrzeuge mit einer Leitungsbefestigungsvorrichtung (100), die einen Befestigungsabschnitt (130) zur Befestigung der Leitungsbefestigungsvorrichtung (100) in einer Aufnahmeeinrichtung (200) einer Hydraulikkomponente (2) der hydraulischen Bremse und einen Verbindungsabschnitt (140) zur Verbindung mit einer Hydraulikleitung (1) aufweist,
wobei die Leitungsbefestigungsvorrichtung (100) einen Fortsatz (110) aufweist, der an dem Befestigungsabschnitt (130) auf der dem Verbindungsabschnitt (140) gegenüberliegenden Seite angeordnet ist,
**dadurch gekennzeichnet, dass** der Fortsatz (110) einen größeren Durchmesser als der Befestigungsabschnitt (130) aufweist.

2. Hydraulikleitungsanschluss (1) nach Anspruch 1, **dadurch gekennzeichnet, dass** die Leitungsbefestigungsvorrichtung (100) eine Trenneinrichtung (120) aufweist, die zwischen dem Befestigungsabschnitt (130) und dem Fortsatz (110) angeordnet ist.

3. Hydraulikleitungsanschluss nach einem der vorhergehenden Ansprüche, **dadurch gekennzeichnet, dass** in dem Fortsatz eine Dichtungseinrichtung (114) angeordnet ist.

4. Hydraulikleitungsanschluss nach einem der vorhergehenden Ansprüche, **dadurch gekennzeichnet, dass** der Fortsatz (110) einen anderen Querschnitt als der Befestigungsabschnitt (130) aufweist.

5. Hydraulikleitungsanschluss nach einem der vorhergehenden Ansprüche, **dadurch gekennzeichnet, dass** die Aussenkontur des Fortsatzes (110) eine andere Form als die Innenkontur der Aufnahmeeinrichtung (200) aufweist.

6. Hydraulikleitungsanschluss nach einem der vorhergehenden Ansprüche, **dadurch gekennzeichnet, dass** der Fortsatz (110) einen um mindestens 5% größeren Durchmesser als der Befestigungsabschnitt (130) aufweist.

7. Hydraulikleitungsanschluss nach einem der vorhergehenden Ansprüche, **dadurch gekennzeichnet, dass** der Fortsatz (110) einen um mindestens 10% größeren Durchmesser als der Befestigungsabschnitt (130) aufweist.

8. Hydraulikleitungsanschluss nach einem der vorhergehenden Ansprüche, **dadurch gekennzeichnet, dass** der Fortsatz (110) einen um mindestens 15% größeren Durchmesser als der Befestigungsabschnitt (130) aufweist.

9. Hydraulikleitungsanschluss nach einem der vorhergehenden Ansprüche, **dadurch gekennzeichnet, dass** der Fortsatz (110) einen weniger als 50% größeren Durchmesser als der Befestigungsabschnitt (130) aufweist.

10. Hydraulikleitungsanschluss nach einem der vorhergehenden Ansprüche, **dadurch gekennzeichnet, dass** der Fortsatz (110) einen weniger als 40% größeren Durchmesser als der Befestigungsabschnitt (130) aufweist.

11. Hydraulikleitungsanschluss nach einem der vorhergehenden Ansprüche, **dadurch gekennzeichnet, dass** der Fortsatz (110) einen weniger als 30% größeren Durchmesser als der Befestigungsabschnitt (130) aufweist.

12. Hydraulikleitungsanschluss nach einem der vorhergehenden Ansprüche, **dadurch gekennzeichnet, dass** der Fortsatz (110) einen 20% größeren Durchmesser als der Befestigungsabschnitt (130) aufweist.

13. Hydraulikleitungsanschluss nach einem der vorhergehenden Ansprüche, **dadurch gekennzeichnet, dass** der Fortsatz (110) einen weniger als 100%, vorzugsweise weniger als 80%, weiter vorzugsweise weniger als 70%, noch weiter vorzugsweise weniger als 60% größeren Querschnitt als der Befestigungsabschnitt (130) aufweist.

14. Hydraulikleitungsanschluss nach einem der vorhergehenden Ansprüche, **dadurch gekennzeichnet, dass** der Fortsatz (110) einen 50% größeren Querschnitt als der Befestigungsabschnitt (130) aufweist.

15. Hydraulische Bremse für lenkergeführte Fahrzeuge mit einem Hydraulikleitungsanschluss gemäß einem der Ansprüche 1 bis 14.

## Claims

1. Hydraulic line connection for a hydraulic brake of handlebar-guided vehicles, comprising a line fastening device (100), which has a fastening portion (130) for fastening the line fastening device (100) in a receiving device (200) of a hydraulic component (2) of the hydraulic brake and a connecting portion (140) for connection to a hydraulic line (1),
wherein the line fastening device (100) has an extension (110) disposed on the fastening portion (130) on the side opposite to the connecting portion (140),
**characterized in that** the extension (110) has a diameter larger than that of the fastening portion (130).

2. Hydraulic line connection (1) according to claim 1, **characterized in that** the line fastening device (100) has a separating device (120) disposed between the fastening portion (130) and the extension (110).

3. Hydraulic line connection according to any of the preceding claims, **characterized in that** a sealing member (114) is arranged in the extension.

4. Hydraulic line connection according to any of the preceding claims, **characterized in that** the extension (110) has a cross-section different from that of the fastening portion (130).

5. Hydraulic line connection according to any of the preceding claims, **characterized in that** the outer contour of the extension (110) has a shape different from that of the inner contour of the receiving device (200).

6. Hydraulic line connection according to any of the preceding claims, **characterized in that** the extension (110) has a diameter that is at least 5% larger than that of the fastening portion (130).

7. Hydraulic line connection according to any of the preceding claims, **characterized in that** the extension (110) has a diameter that is at least 10% larger than that of the fastening portion (130).

8. Hydraulic line connection according to any of the preceding claims, **characterized in that** the extension (110) has a diameter that is at least 15% larger than that of the fastening portion (130).

9. Hydraulic line connection according to any of the preceding claims, **characterized in that** the extension (110) has a diameter that is less than 50% larger than that of the fastening portion (130).

10. Hydraulic line connection according to any of the preceding claims, **characterized in that** the extension (110) has a diameter that is less than 40% larger than that of the fastening portion (130).

11. Hydraulic line connection according to any of the preceding claims, **characterized in that** the extension (110) has a diameter that is less than 30% larger than that of the fastening portion (130).

12. Hydraulic line connection according to any of the preceding claims, **characterized in that** the extension (110) has a diameter that is 20% larger than that of the fastening portion (130).

13. Hydraulic line connection according to any of the preceding claims, **characterized in that** the extension (110) has a cross-section that is less than 100%, preferably less than 80%, more preferably less than 70%, in particular less than 60%, larger than that of the fastening portion (130).

14. Hydraulic line connection according to any of the preceding claims, **characterized in that** the extension (110) has a cross-section that is 50% larger than that of the fastening portion (130).

15. Hydraulic brake for handlebar-guided vehicles, comprising a hydraulic line connection according to any of claims 1 to 14.

## Revendications

1. Raccordement de conduite hydraulique pour un frein hydraulique de véhicules guidés au moyen d'un guidon, comportant un dispositif de fixation de conduite (100) qui présente une portion de fixation (130) pour la fixation du dispositif de fixation de conduite (100) dans un moyen de logement (200) d'un composant hydraulique (2) du frein hydraulique et une portion de liaison (140) pour la liaison à une conduite hydraulique (1),
dans lequel
le dispositif de fixation de conduite (100) présente un prolongement (110) disposé sur la portion de fixation (130) du côté opposé à la portion de liaison (140),
**caractérisé en ce que**
le prolongement (110) présente un diamètre supérieur à celui de la portion de fixation (130).

2. Raccordement de conduite hydraulique (1) selon la revendication 1, **caractérisé en ce que** le dispositif de fixation de conduite (100) comprend un séparateur (120) disposé entre la portion de fixation (130) et le prolongement (110).

3. Raccordement de conduite hydraulique selon l'une des revendications précédentes,
**caractérisé en ce qu'**un moyen d'étanchéité (114) est disposé dans le prolongement.

4. Raccordement de conduite hydraulique selon l'une des revendications précédentes,
**caractérisé en ce que** le prolongement (110) présente une section transversale différente de celle de la portion de fixation (130).

5. Raccordement de conduite hydraulique selon l'une des revendications précédentes,
**caractérisé en ce que** le contour extérieur du plongement (110) présente une forme différente de celle du contour intérieur du moyen de logement (200).

6. Raccordement de conduite hydraulique selon l'une des revendications précédentes,
**caractérisé en ce que** le prolongement (110) présente un diamètre supérieur d'au moins 5 % à celui de la portion de fixation (130).

7. Raccordement de conduite hydraulique selon l'une des revendications précédentes,
**caractérisé en ce que** le prolongement (110) présente un diamètre supérieur d'au moins 10 % à celui de la portion de fixation (130).

8. Raccordement de conduite hydraulique selon l'une des revendications précédentes,
**caractérisé en ce que** le prolongement (110) présente un diamètre supérieur d'au moins 15 % à celui de la portion de fixation (130).

9. Raccordement de conduite hydraulique selon l'une des revendications précédentes,
**caractérisé en ce que** le prolongement (110) présente un diamètre supérieur de moins de 50 % à celui de la portion de fixation (130).

10. Raccordement de conduite hydraulique selon l'une des revendications précédentes,
**caractérisé en ce que** le prolongement (110) présente un diamètre supérieur de moins de 40 % à celui de la portion de fixation (130).

11. Raccordement de conduite hydraulique selon l'une des revendications précédentes,
**caractérisé en ce que** le prolongement (110) présente un diamètre supérieur de moins de 30 % à celui de la portion de fixation (130).

12. Raccordement de conduite hydraulique selon l'une des revendications précédentes,
**caractérisé en ce que** le prolongement (110) présente un diamètre supérieur de 20 % à celui de la portion de fixation (130).

13. Raccordement de conduite hydraulique selon l'une des revendications précédentes,
**caractérisé en ce que** le prolongement (110) présente une section transversale supérieure de moins de 100 %, de préférence de moins de 80 %, de manière particulièrement préférée de moins de 70 %, et de manière tout particulièrement préférée de moins de 60 % à celle de la portion de fixation (130).

14. Raccordement de conduite hydraulique selon l'une des revendications précédentes,
**caractérisé en ce que** le prolongement (110) présente une section transversale supérieure de 50 % à celle de la portion de fixation (130).

15. Frein hydraulique pour des véhicules guidés au moyen d'un guidon, comportant un raccordement de conduite hydraulique selon l'une des revendications 1 à 14.
